# EUROPÄISCHE PATENTSCHRIFT

(11) **EP 1 365 189 B1**
(45) Veröffentlichungstag und Bekanntmachung des Hinweises auf die Patenterteilung: **25.08.2010**
(21) Anmeldenummer: 03011483.9
(22) Anmeldetag: 21.05.2003
(51) Int. Cl.: F21S 8/00, G02B 6/00, F21V 9/08

(54) **Leuchte**
Luminaire
Luminaire

(30) Priorität: 21.05.2002 DE 10223245
(43) Veröffentlichungstag der Anmeldung: 26.11.2003
(73) Patentinhaber: Zumtobel Lighting GmbH, 32657 Lemgo (DE)
(72) Erfinder: Gujenas, Stanislaus, 65439 Flörsheim (DE); Cremer, Michael, 61239 Ober-Mörlen (DE); Gassner, Patrik, 6721 St. Gerold 65 (AT)
(74) Vertreter: Fuchs

(56) Entgegenhaltungen:
- DE-U- 20 016 857
- DE-U- 29 921 689
- FR-A1- 2 576 566
- US-A- 4 680 684
- PATENT ABSTRACTS OF JAPAN Bd. 2000, Nr. 08, 6. Oktober 2000 (2000-10-06) -& JP 2000 133011 A (ICHIKOH IND LTD), 12. Mai 2000 (2000-05-12)
- PATENT ABSTRACTS OF JAPAN Bd. 2000, Nr. 01, 31. Januar 2000 (2000-01-31) -& JP 11 273437 A (NIPPON ZEON CO LTD), 8. Oktober 1999 (1999-10-08)

## Beschreibung

Die Erfindung betrifft eine Leuchte mit einem einen Gehäusedeckel aufweisenden langgestreckten Gehäuse, in dem eine Raumbeleuchtungseinrichtung angeordnet ist, und mit einer Lichtführungsstruktur, die ein Lichteinkoppelelement, einen Lichtleiter und ein Lichtauskoppelelement aufweist und die einen Teil des von der Raumbeleuchtungseinrichtung in die Lichtführungseinrichtung eingetretenen Lichts zur Ausleuchtung zusätzlicher Gehäuseabschnitte durch das Lichtauskoppelelement in das Gehäuseinnere abstrahlt.

Derartige Leuchten werden vorzugsweise im Krankenhausbereich in den Krankenzimmern eingesetzt. Bei diesen Leuchten kommt es darauf an, dass eine ausreichende Raumbeleuchtung geschaffen wird, wobei zusätzliche Beleuchtungsaufgaben, wie z.B. auch ausreichende Beleuchtung bei medizinischen Untersuchungen der Patienten, oder Bereitstellung einer Lesebeleuchtung erfüllt werden müssen. Darüber hinaus sollen mit solchen Leuchten auch lichttechnische Akzente gesetzt werden.

Im Krankenhausbereich werden in den Krankenzimmern Versorgungskanäle eingesetzt, die an den Betten die erforderlichen Energien wie Elektrizität, Gas und Druckluft zum Betreiben entsprechender medizinischer Geräte bereitstellen. Diese Versorgungskanäle werden oberhalb der Betten angeordnet und erstrecken sich u.U. über die ganze Zimmerbreite. Derartige Versorgungskanäle können auch mit Beleuchtungseinrichtungen versehen sein, die eine Raumbeleuchtungseinrichtung und eine Leselichteinrichtung umfassen. Die Leselichteinrichtung ist entweder fest in dem Versorgungskanal integriert oder an der Unterseite des Versorgungskanals verschiebbar angebracht.

Außerdem haben solche Versorgungskanäle den Nachteil, dass sowohl die Anordnung der Beleuchtungseinrichtung als auch das abgestrahlte Frequenzspektrum fest vorgegeben sind.

Aus der EP 0 739 618 B1 ist eine Versorgungseinheit für Krankenzimmer bekannt, die eine längs des Versorgungsbalkens verlaufende langgestreckte Leuchteneinheit aufweist. Diese Leuchteneinheit ist im Querschnitt dreieckig und weist eine nach oben abstrahlende Lampe für die Raumbeleuchtung und eine schräg nach unten abstrahlende Lampe sowie eine Leselampe auf. Diese Leuchteneinheit ist ausschließlich funktional ausgerichtet und erlaubt keine individuellen Beleuchtungseffekte.

Es sind auch eigenständige Leuchten bekannt, die eine Raumbeleuchtungseinrichtung und ggf. eine Leselichteinrichtung aufweisen. Diese

Leuchten sind individuell anbringbar, haben jedoch den Nachteil, dass sie nicht den individuellen Bedürfnissen des Patienten angepasst werden können.

Aus der DE 299 21 689 U1 ist ein Wand-, Decken- und Fassadenverkleidungssystem für Gebäude bekannt, welches von plattenförmigen Verkleidungselementen gebildet wird, die flächige, dünne Platten aus lichtleitendem Material aufweisen, welche durch Einspeisung von Strahlung in die Kanten sichtbares Licht von ihren Flachseiten abstrahlen.

Aus der JP 200133011 ist ein Kfz-Scheinwerfer mit Lichtleitelementen bekannt, welche Licht von der Lichtquelle in seitliche Richtung aus dem Scheinwerfergehäuse herausleiten.

Aus der DE 19 529 054 A1 ist eine selbstleuchtende Gehäusefläche von Leuchten mit Hilfe der Einleitung von Licht bekannt. Die dem Leuchtmittel zugewandte Flanke der Gehäusefläche bildet einen Keilwinkel. Die Einleitung und auch die Weiterleitung des Lichtes in der Gehäusewand erfolgt durch Totalreflektion und Brechung der Lichtstrahlen. Nach deren Weiterleitung wird das Licht über die mattierte Oberfläche der Gehäuseplatte abgestrahlt. Ein Lichtauskoppelelement ist nicht vorhanden, da die gesamte äußere Fläche aufgrund der Mattierung das eingestrahlte Licht aus der Gehäuseplatte abstrahlt. Mittels einer farbigen Zwischenlage kann ein Farbeffekt erzielt werden.

Eine Leuchte der eingangs genannten Art mit einem langgestreckten Gehäuse und mit zwei Lichtquellen ist aus der DE 20 016 857 U1 bekannt. Die erste Lichtquelle ist mit einem nach oben offenen länglichen Reflektor angeordnet, aus der das Licht nach oben abgestrahlt wird. Diese Lichtquelle bildet die Raumbeleuchtungseinrichtung. In einem der Rückseite des Gehäuses gegenüberliegenden Stirnteil des Gehäuses ist die zweite Lichtquelle angeordnet, die an ein keilförmiges Lichtauskopplungselement angrenzt, in das das von der zweiten Lichtquelle ausgehende Licht eintritt. Dieses Lichtauskopplungselement ragt aus der Stirnseite des Gehäuses vor und strahlt in den umgebenden Raum nach allen Seiten Licht ab. Ferner ist im Inneren des Gehäuses eine lichtleitende gekrümmte Platte als Lichtführungsstruktur vorgesehen, in die ein Teil des von der ersten Lichtquelle bzw. der Raumbeleuchtungseinrichtung ausgesandten Lichtes eintritt und ebenfalls dem keilförmigen Lichtauskopplungselement zuführt. Wenn alle Lichtquellen eingeschaltet sind, ist die Wirkung der lichtleitenden Platte nicht zu bemerken. Erst wenn die zweite Lichtquelle ausgeschaltet wird, ist das durch die lichtleitende Platte von der ersten Lichtquelle eingekoppelte Licht bemerkbar und das keilförmige Lichtelement ist schwach erleuchtet. Diese bekannte Leuchte erlaubt eine gewisse Anpassung an die individuellen Bedürfnisse der Patienten, ist jedoch vom Aufbau relativ kompliziert und aufwendig.

Es ist daher Aufgabe der Erfindung, eine kompakte Leuchte zu schaffen, mit der auf einfache Weise weitere interessante Beleuchtungseffekte erzielt werden können.

Diese Aufgabe wird mit einer Leuchte gelöst, bei der die Lichtführungsstruktur so in die Gehäusewand integriert ist, dass der Teil des in die Lichtführungsstruktur eingetretenen Lichts zur Ausleuchtung zusätzlicher Gehäuseabschnitte durch das Lichtauskoppelelement in das Gehäuseinnere abstrahlt.

Durch die Integration einer Lichtführungsstruktur, die ein Lichteinkoppelelement, einen Lichtleiter und ein Lichtauskoppelelement umfasst, ist kein zusätzliches Bauteil erforderlich. Die Lichtführungsstruktur kann bei der Herstellung des Gehäuses, d.h. bei der Herstellung der Gehäusewände hergestellt werden. Es wird damit die Herstellung und auch die Montage der Leuchte deutlich vereinfacht, weil keine separaten Lichtleiterkomponenten eingebaut werden müssen.

Dadurch, dass das Lichtauskoppelelement derart angeordnet und ausgerichtet ist, dass es in das Gehäuseinnere abstrahlt, erfolgt innerhalb des Gehäuses eine Umverteilung des Lichtes, so dass eine Ausleuchtung zusätzlicher Gehäuseabschnitte ermöglicht wird, ohne dass in der einfachsten Ausführungsform zusätzliche Beleuchtungseinrichtungen erforderlich werden, die im Gehäuse angebracht sein müssten.

Vorzugsweise erstreckt sich die Lichtführungsstruktur in Querrichtung des Gehäuses. Dadurch wird es möglich, das Licht einer im Gehäuse angeordneten Beleuchtungseinrichtung, insbesondere der Raumbeleuchtungseinrichtung, für die Ausleuchtung mindestens eines Stirnwandbereiches des Gehäuses einzusetzen, um damit einen besonderen Beleuchtungseffekt zu erzielen.

Das Lichtauskoppelelement ist daher vorzugsweise in eine an die Gehäusestimwand angrenzende Stirnwandkammer gerichtet. Diese Stirnwandkammer kann gemäß einer ersten Ausführungsform leer sein, so dass das aus dem Lichtauskoppelelement abgestrahlte Licht auf die Stirnwand des Gehäuses und/oder auf einen Bodenwandund/oder Deckwandabschnitt gelenkt werden kann.

Wenn die Stirnwand oder mindestens ein Abschnitt der Stirnwand oder der Bodenoder Deckenwand aus lichtdurchlässigem Material besteht, strahlt das Licht diffus an der Vorderseite in den Raum ab, wodurch eine zusätzliche Raumbeleuchtung geschaffen wird, die aber aufgrund einer deutlich geringeren Lichtintensität, wie sie von einer separaten Beleuchtungseinrichtung abgestrahlt wird, zu einem blendfreien diffusen Licht führt.

Wenn der mindestens eine lichtdurchlässige Abschnitt der Gehäusewand eingefärbt ist, wird ein zusätzlicher Stimmungseffekt erzielt.

Gemäß einer weiteren Ausführungsform kann in dieser Stirnwandkammer ein zusätzlicher Farbfilter, z.B. eine Farbfilterscheibe, angeordnet sein, der vorzugsweise an der Deckwand der Stirnwand vorgesehen ist. Die Deckwand ist in diesem Bereich vorteilhafterweise ebenfalls lichtdurchlässig ausgebildet. Der lichtdurchlässige Deckwandbereich kann auch vorgesehen sein, ohne dass dieser zusätzliche Farbfilter davor angeordnet ist.

Die Anordnung von Lichtauskoppelelement und Farbfilter kann derart aufeinander abgestimmt werden, dass das gesamte ausgekoppelte Licht in eine Lichteintrittsfläche des Farbfilters eintritt, so dass farbiges Licht nach oben abgestrahlt wird und somit dem Raumlicht, das durch die Raumbeleuchtungseinrichtung abgestrahlt wird, ein zusätzlicher Farbeffekt beigemischt wird.

Es kann aber auch gemäss einer weiteren Ausführungsform lediglich ein Teil des ausgekoppelten Lichtes in diesen Farbfilter eingeleitet werden, während der übrige Teil des Lichtes, wie in der zuvor beschriebenen Ausführungsform, auf die Stirnwand des Gehäuses gelenkt wird. Es besteht somit die Möglichkeit, durch unterschiedliche Farbwahl des lichtdurchlässigen Abschnittes der Stirnwand und/oder des Farbfilters weitere Beleuchtungseffekte auf einfache Weise zu erzielen. Weiterhin kann dieser Farbfilter derart ausgeführt sein, dass kein ausgekoppeltes Licht in den Farbfilter gelangt.

Bei den bisherigen Ausführungsformen werden die Beleuchtungseffekte nur dann erzielt, wenn die Raumbeleuchtungseinrichtung eingeschaltet ist, weil ein Teil dieses Lichtes für diese zusätzlichen Lichteffekte abgezweigt wird.

Um von der Raumbeleuchtungseinrichtung unabhängig zu werden, ist in der Stirnwandkammer vorzugsweise eine zweite Beleuchtungseinrichtung angeordnet, die separat hinzugeschaltet werden kann, so dass der durch die Stirnwand bzw. durch den Deckwandabschnitt erreichte Beleuchtungseffekt verstärkt werden kann. Es wird damit in diesem Bereich ein stärkerer Lichtakzent gesetzt, als dies nur mit der Lichtführungsstruktur möglich ist Es besteht dann die Möglichkeit, wahlweise die Raumbeleuchtungseinrichtung einzuschalten und lediglich das abgezweigte Licht für diese Lichteffekte zu nutzen, oder aber die Raumbeleuchtungseinrichtung auszuschalten und lediglich die zweite Beleuchtungseinrichtung zu nutzen oder beide zu kombinieren. Es gibt somit mehrere Möglichkeiten, um eine individuelle Stimmung im Raum zu schaffen.

Eine weitere Ausführungsform sieht vor, dass vor der Lichtführungsstruktur, d.h. vor dem Lichteinkoppelelement eine dritte Beleuchtungseinrichtung angeordnet ist, die ebenfalls separat geschaltet werden kann. Es ist somit möglich, unabhängig von der Raumbeleuchtungseinrichtung Licht in die Lichtführungsstruktur einzukoppeln, so dass die besonderen Lichteffekte unabhängig von der Raumbeleuchtungseinrichtung erzielt werden können.

Gemäß einer weiteren Ausführungsform kann vor dem Lichteinkoppelelement ein weiterer Farbfilter, z.B. eine Farbfilterscheibe, angeordnet sein. Es besteht dadurch die Möglichkeit, farbiges Licht in die Stirnwandkammer einzustrahlen und mit diesem Licht die Stirnwand des Gehäuses auszuleuchten, so dass im Falle eines nicht eingefärbten Stirnwandabschnittes der farbige Effekt ausschließlich durch das Filterelement bestimmt wird. Es kann aber auch im Falle eines eingefärbten Stirnwandabschnittes eine Farbmischung erzeugt werden. Wenn ein Teil des eingekoppelten Lichtes in den zuvor beschriebenen Farbfilter eingeleitet wird, können weitere Lichtmischeffekte erzielt werden.

Die Variationsmöglichkeit kann noch weiter vergrößert werden, wenn der Farbfilter aus einer abgewinkelten Scheibe besteht, wobei ein Schenkel vor dem Lichteinkoppelelement und der andere Schenkel unter der Gehäusedeckwand angeordnet ist, die ebenfalls in diesem Fall dann lichtdurchlässig ausgebildet ist.

Die zweite und dritte Beleuchtungseinrichtung kann jeweils einzelne oder mehrfache Leuchtmittel, wie Leuchtstoffröhren, umfassen. Diese Leuchtmittel können weißes oder farbiges Licht abstrahlen, wobei alle möglichen Kombinationen möglich sind. Insbesondere kann eine der beiden Beleuchtungseinrichtungen weißes Licht und die andere farbiges Licht abstrahlen oder beide Beleuchtungseinrichtungen können farbiges Licht abstrahlen. Hierbei kann die Farbe der beiden Beleuchtungseinrichtungen unterschiedlich oder auch gleich sein.

Bei der Abstrahlung von farbigem Licht kann über die genannten Farbfilter in der Stirnwandkammer und/oder vor dem Lichteinkoppelelement und/oder über die farbige oder nichtfarbige Stirnwand Farbmischeffekte erzielt werden.

Soweit Farbfilterscheiben unterhalb von Deckwandabschnitten vorgesehen sind, ist es auch denkbar, auf diese zu verzichten und eingefärbte Deckwandabschnitte vorzusehen. Die Verwendung separater Farbfilterscheiben lässt auf einfache Weise Änderungen an der Leuchte zu, ohne dass unterschiedliche Gehäusedeckel vorgehalten werden müssen.

Es wird somit eine modulare Bauweise realisiert, so dass auf einfache Weise die unterschiedlichsten Beleuchtungseffekte möglich werden. Die Leuchte ermöglicht in der einfachsten Ausgestaltung die Abstrahlung von nur weißem Licht, wobei über die Lichtführungsstruktur die Beleuchtungseffekte lediglich über die Lichtintensität im weißen Bereich erzielt werden.

Die Leuchte kann in den weiteren Ausgestaltungen durch Ergänzungen durch Farbfilter und/oder farbige Leuchtmittel zur Erzielung verschiedener Farbeffekte ausgebaut werden, wobei in allen Ausführungsformen der Lichtführungsstruktur eine zentrale Bedeutung zukommt.

Zusätzlich kann die Leuchte noch eine Leselichteinrichtung aufweisen, die vorzugsweise zwischen der Raumbeleuchtungseinrichtung und der Stirnwand angeordnet ist und nach unten abstrahlt.

Um die Leselichteinrichtung individuell einstellen zu können, ist diese verschiebbar, vorzugsweise an einer im Gehäuse angeordneten Trennwand in Längsrichtung verschiebbar angeordnet.

Um eine kompakte Anordnung zu schaffen, ist die Lichtführungsstruktur vorzugsweise über der Leselichteinrichtung angeordnet.

Eine kompakte Anordnung wird auch dadurch geschaffen, dass alle Beleuchtungseinrichtungen innerhalb des Gehäuses in Querrichtung nebeneinander angeordnet sind.

Um die verschiedenen Beleuchtungseinrichtungen zugänglich zu machen, ohne dass mehrere Gehäuseteile entfernt werden müssen, weißt das Gehäuse vorzugsweise einen Grundrahmen auf, an dem lösbar ein Gehäusedeckel befestigt ist, der mindestens einen Teil der Deckwand, die Stirnwand und einen Teil der Bodenwand umfasst und im wesentlichen U-förmig ausgebildet ist.

Vorzugsweise ist der Gehäusedeckel aus Kunststoff, insbesondere aus PMMA (Polymethylmethacrylat) oder PC (Polycarbonat) hergestellt, so dass lichtdurchlässige Abschnitte in den Gehäusedeckel integriert werden können. Auch die übrigen Gehäusewände können aus diesen Kunststoffen gefertigt sein.

Für eine einfache Handhabung ist der Gehäusedeckel vorzugsweise auf den Grundrahmen aufsteckbar.

Um alle Beleuchtungseffekte voll nutzen zu können, sind alle Beleuchtungseinrichtungen unabhängig voneinander schaltbar und/oder dimmbar.

Um eine tageszeitabhängige individuelle Beleuchtung schaffen zu können, ist die Raumbeleuchtungseinrichtung, die zweite Beleuchtungseinrichtung und/oder die dritte Beleuchtungseinrichtung an eine programmierbare Steuereinrichtung angeschlossen. Es kann somit über ein entsprechendes Beleuchtungsprogramm z.B. vormittags eine andere Ausleuchtung des Raumes vorgenommen werden, als abends, wobei dies wiederum auch auf die Wetterlage oder die Stimmungslage des Patienten abgestimmt werden kann.

Beispielhafte Ausführungsformen der Erfindung werden nachfolgend anhand der Zeichnungen näher erläutert.

Es zeigen:
- Figur 1: eine perspektivische Ansicht der Leuchte,
- Figur 2: einen Schnitt längs der Linie A-A durch die in Figur 1 gezeigte Leuchte,
- Figur 3: die in Figur 2 gezeigte Leuchte mit abgenommenem Deckel,
- Figur 4: die in Figuren 2 und 3 gezeigte Leuchte im montierten Zustand mit einem Versorgungsbalken und
- Figur 5: einen Querschnitt längs der Linie A-A durch eine Leuchte gemäß einer weiteren Ausführungsform.

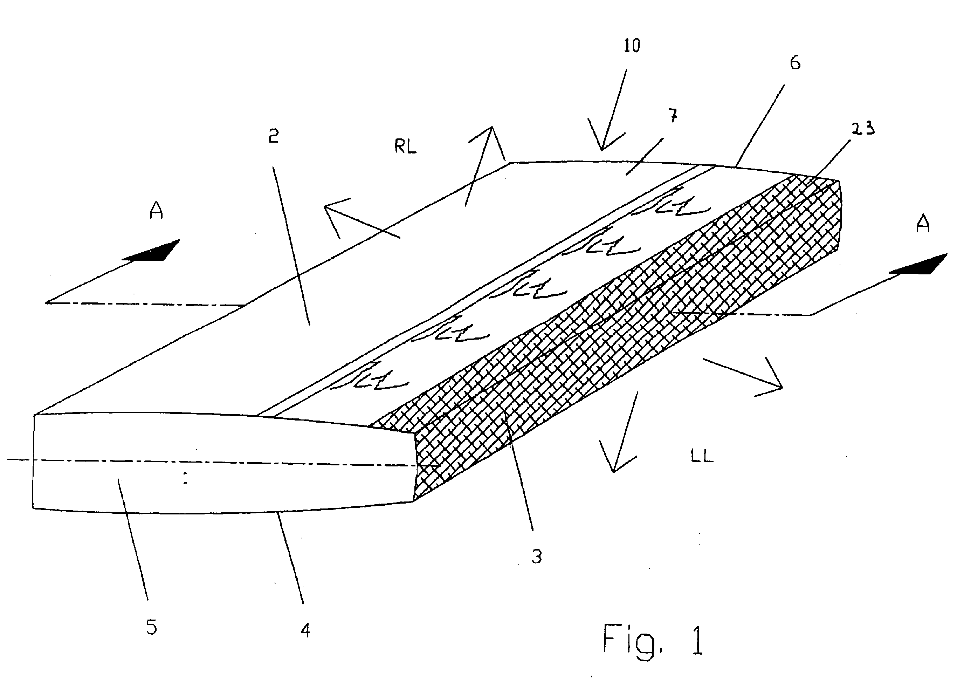

In der Figur 1 ist das langgestreckte und in dieser Ausführungsform kastenförmige Gehäuse 10 perspektivisch dargestellt. Das Gehäuse 10 besitzt eine Rückwand 1, mit der die Leuchte beispielsweise an einer Zimmerwand (nicht dargestellt) befestigt werden kann. Des weiteren umfasst das Gehäuse 10 zwei Seitenwände 5 und 6, eine Bodenwand 4, eine Stirnwand 3 und eine Deckwand 2, die in der hier gezeigten Darstellung zwei Wandabschnitte aufweist, wobei der hintere, der Rückwand benachbarte Wandabschnitt 7 aus einem lichtdurchlässigen Material besteht, so dass die darunter angeordnete Raumbeleuchtungseinrichtung 41 nach oben abstrahlen kann. Dies ist durch die beiden durch RL gekennzeichneten Pfeile angedeutet. Die Stirnwand 3 besteht ebenfalls aus einem lichtdurchlässigen Material, das in der hier gezeigten Ausführungsform eine Einfärbung umfassen soll. Ferner ist in dem Gehäuse eine Leselichteinrichtung 51 angeordnet, die Leselicht nach unten abstrahlt, was durch die beiden Pfeile LL gekennzeichnet ist.

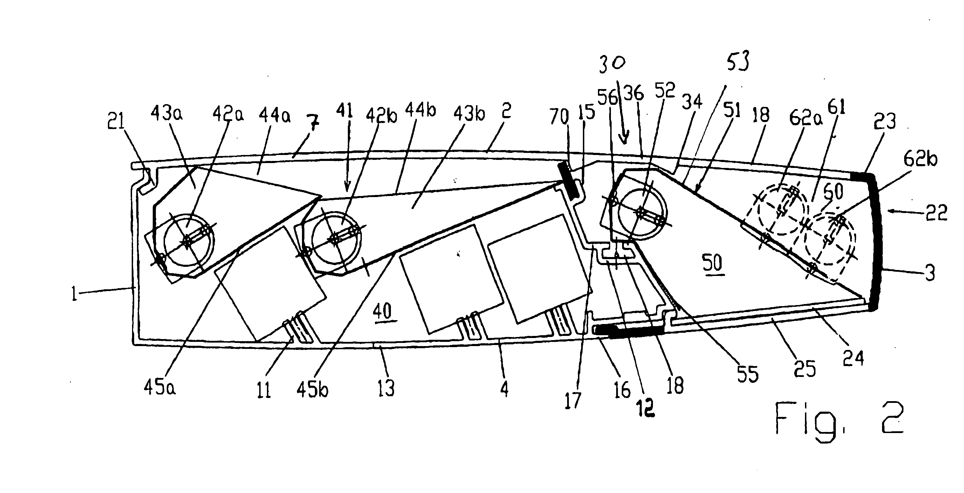

In der Figur 2 ist ein Querschnitt längs der Linie A-A der in Figur 1 gezeigten Leuchte dargestellt. Das Gehäuse 10 besteht aus einem Grundrahmen 11, beispielsweise aus Metall und umfasst im wesentlichen die Rückwand 1 und von der Bodenwand 4 den Bodenwandabschnitt 13 sowie eine Zwischenwand 12, die nachfolgend noch näher erläutert wird.

Der Gehäusedeckel 20 umfasst die Deckwand 2, die Stirnwand 3 und von der Bodenwand 4 den Bodenwandabschnitt 25. Der Gehäusedeckel 20 ist auf dem Grundrahmen 11 aufsteckbar. Hierzu besitzt der Grundrahmen 11 eine sich in Längsrichtung des Gehäuses erstreckende Halteleiste 14, die von einer am Gehäusedeckel 20 angeformten Klemmleiste 21 untergriffen wird. Ferner besitzt der Grundrahmen 11 eine Halteleiste 16, an der eine Haltenase 27, die auch als Halteleiste ausgebildet sein kann, angreift. Diese Haltenase 27 oder Halteleiste ist an einem Bodenwandabschnitt 26 angeformt, der aus lichtdurchlässigem Material bestehen kann, wobei vorzugsweise dieses Material lediglich transluzent ausgebildet ist, während der Bodenwandabschnitt 25 aus klarem Material besteht. Die Stirnwand 3 ist ebenfalls aus transluzentem Material gebildet, wobei der lichtdurchlässige Frontabschnitt 22 sich nicht nur über die Stirnwand 3 sondern auch über den Deckwandabschnitt 23 erstreckt.

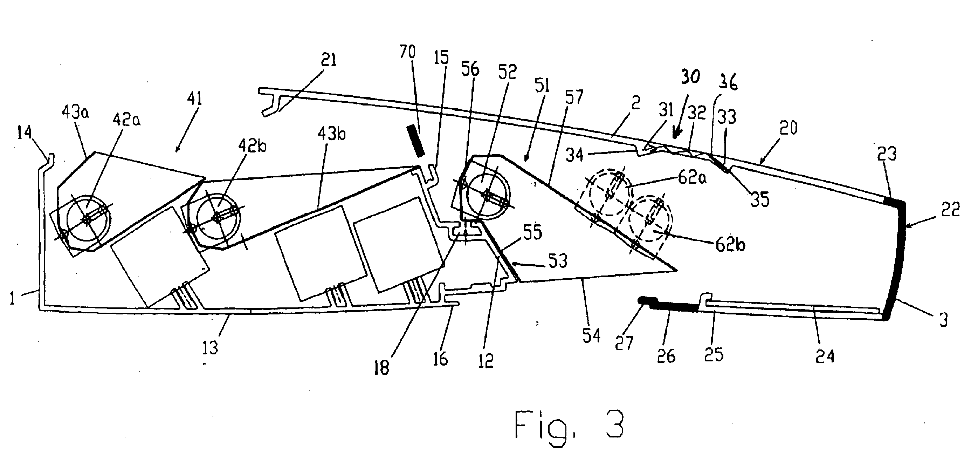

In der Figur 3 ist die Leuchte mit abgenommenem Gehäusedeckel 20 dargestellt, so dass die im wesentlichen U-förmige Struktur des Gehäusedeckels erkennbar ist.

Die sich in Längsrichtung erstreckende Zwischenwand 12 reicht nicht bis zur Deckwand 2, so dass ein Zwischenraum vorhanden ist, in den eine Farbfilterscheibe 70 in eine Filteraufnahme 15 der Zwischenwand 12 eingesetzt werden kann. Die Zwischenwand 12 unterteilt das Gehäuse in eine erste Kammer 40 und eine zweite Kammer, wobei diese in die Leselichtkammer 50 und die Stirnwandkammer 60 unterteilt ist.

In der ersten Kammer 40 ist die Raumbeleuchtungseinrichtung 41 mit den beiden Leuchtmitteln 42a, 42b, d.h. den Leuchtstoffröhren, und mit den dazugehörigen Reflektoren 43a, b angeordnet. Die Reflektoren 43a, b sind so ausgerichtet, dass das von den Leuchtmitteln 42a, b abgestrahlte Licht schräg nach oben abgestrahlt wird. Die zugeordneten Reflektoröffnungen 44a, b sind schräg angeordnet. Die Reflektorbodenwände 45a, b grenzen an nicht näher bezeichnete Versorgungseinrichtungen für die Beleuchtungseinrichtung 41 an.

Ein Teil des von der Raumbeleuchtungseinrichtung 41 abgestrahlte Licht tritt durch die Filterscheibe 70 in die Lichtführungsstruktur 30 ein, die in die Deckwand 2 des Gehäusedeckels 20 eingeformt ist. Die Lichtführungsstruktur 30 weist ein Lichteinkoppelelement 31 mit einer Lichteintrittsfläche 34, einen Lichtleiter 32 und ein Lichtauskoppelelement 33 mit einer Lichtaustrittsfläche 35 auf.

Diese Lichtführungsstruktur 30 erstreckt sich in Querrichtung des Gehäuses, so dass das von der Raumbeleuchtungseinrichtung 40 abgestrahlte Licht in die vordere Stirnwandkammer 60 gelenkt wird. Die Lichteintrittsfläche 34 ist schräg angeordnet, so dass das von der Beleuchtungseinrichtung 40, insbesondere das von der Leuchtstoffröhre 42b abgestrahlte Licht senkrecht auf die Lichteintrittsfläche 34 auftrifft. Die Filterscheibe 70 ist unter einem entsprechenden Winkel in der Filteraufnahme 15 gehalten, so dass das Licht ebenfalls senkrecht auf diese Filterscheibe 70 auftrifft. Der Strahlengang ist durch die Linie 36 gekennzeichnet, wobei die Einstrahlung in den Lichtleiter 32, der Bestandteil der Deckwand 2 ist, durch Totalreflexion bis zur Lichtauskoppeleinrichtung 33 geführt wird. Die Lichtaustrittsfläche 34 ist ebenfalls geneigt angeordnet, so dass das abgestrahlte Licht auf die Stirnwand 3 gerichtet ist und dort für eine Ausleuchtung sorgt.

Die Stirnwandkammer 60 besitzt einen dreieckigen Querschnitt und wird begrenzt von der Stirnwand 3 und den Deckwandabschnitten 23 und 28 sowie von dem Reflektor 53 und dessen Reflektorwand 57. Der Raum zwischen der Reflektorwand 57, der Zwischenwand 12 und dem Bodenwandabschnitt 25 wird durch die Leselichteinrichtung 51 ausgefüllt, die eine Leuchtstoffröhre 52 aufweist, die sich ebenfalls in Längsrichtung des Gehäuses erstreckt. Die Reflektoröffnung 54 weist nach unten.

Gehalten wird die Leselichteinrichtung 51 über die Reflektorwände 55, 56 mittels eines nicht dargestellten Befestigungsmittels in einer Verschiebenut 18 in dem Zwischenwandplateau 17 der Zwischenwand 12. Es ist dadurch möglich, die gesamte Leselichteinrichtung 51 in Längsrichtung des Gehäuses zu verschieben. Dies setzt voraus, dass die Leselichteinrichtung 51 in der hier gezeigten Ausführungsform in Längsrichtung kürzer ist als das Gehäuse 10.

Die Lichtführungsstruktur 30 überbrückt somit den Bereich der Leselichteinrichtung. Die Leselichteinrichtung 51 kann zusätzlich noch mit einer Prismenscheibe 24 für eine optimale Lichtverteilung ausgestattet sein, die auf dem Bodenwandabschnitt 25 aufliegt.

Die Stirnwandkammer 60 kann leer sein, es besteht aber auch die Möglichkeit, eine zweite Beleuchtungseinrichtung 61 mit zwei Leuchtstoffröhren 62a und b vorzusehen, die auf der Reflektorwand 57 befestigt sind. In diesem Fall wird das von der Stirnwandkammer 60 abgestrahlte Licht zusätzlich verstärkt. Da die Leuchtstoffröhren 62a, b sich im Strahlengang des von dem Lichtauskoppelelement 33 abgestrahlten Lichtes befinden, ist es von Vorteil, wenn die Leuchtstoffröhren 62a, b kürzer sind als die Längserstreckung der Lichtführungsstruktur 30. Es ist dadurch möglich, dass das von dem Lichtauskoppelelement 33 abgestrahlte Licht an der zweiten Beleuchtungseinrichtung 60 vorbei auf die Stirnwand 3 auftrifft.

In der Figur 3 ist die in Figur 1 dargestellt Leuchte mit abgenommenen Deckel dargestellt, so dass die Leselichteinrichtung zugänglich ist und ggf. eine Verschiebung in der Verschiebenut 18 vorgenommen werden kann.

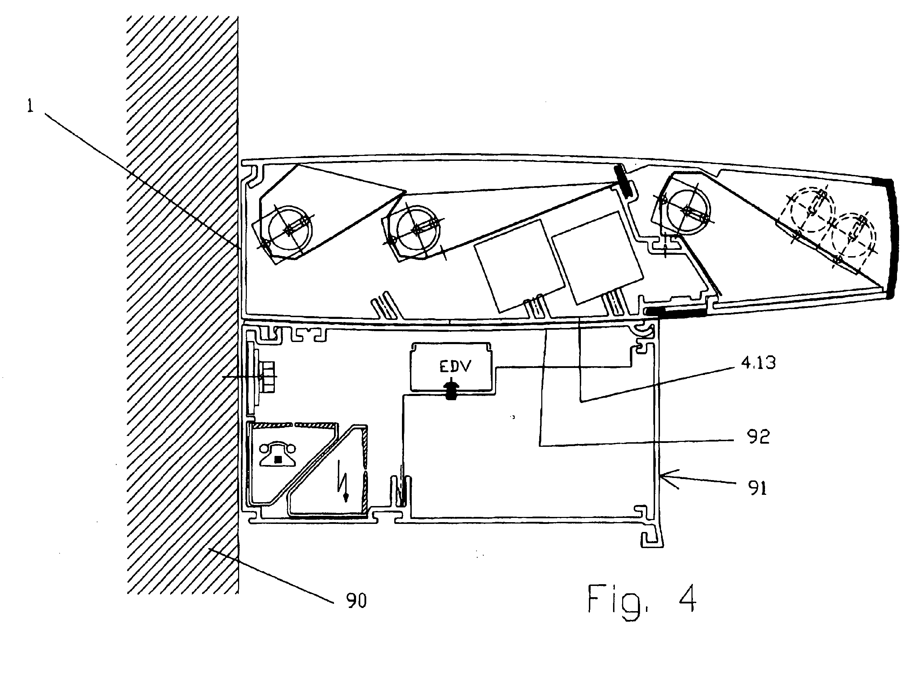

In der Figur 4 ist die in den Figuren 1 und 2 dargestellte Leuchte im montierten Zustand dargestellt. Die Rückwand 1 ist mittels nicht dargestellter Befestigungsmittel an einer Zimmerwand 90 befestigt. Auf diese Befestigung kann verzichtet werden, wenn die Leuchte auf einem Versorgungsbalken 91 befestigt ist, der seinerseits an der Zimmerwand 90 anmontiert ist. Der Versorgungsbalken 91 kann verschiedene Zuleitungen wie Gas, Druckluft, Wasser, Strom, usw. enthalten und somit auch die elektrische Versorgung für die Leuchte bilden. Der Bodenwandabschnitt 13 ist vorzugsweise so lang bzw. breit ausgebildet, wie die Deckwand 92 des Versorgungsbalkens 91. Somit kann der Gehäusedeckel 20 problemlos entfernt werden, ohne die Leuchte von dem Versorgungsbalken 91 zu entfernen. Die konvexe Wölbung des Bodenwandabschnittes 13 entspricht der konkaven Wölbung der Deckwand 92 des Versorgungsbalkens 91.

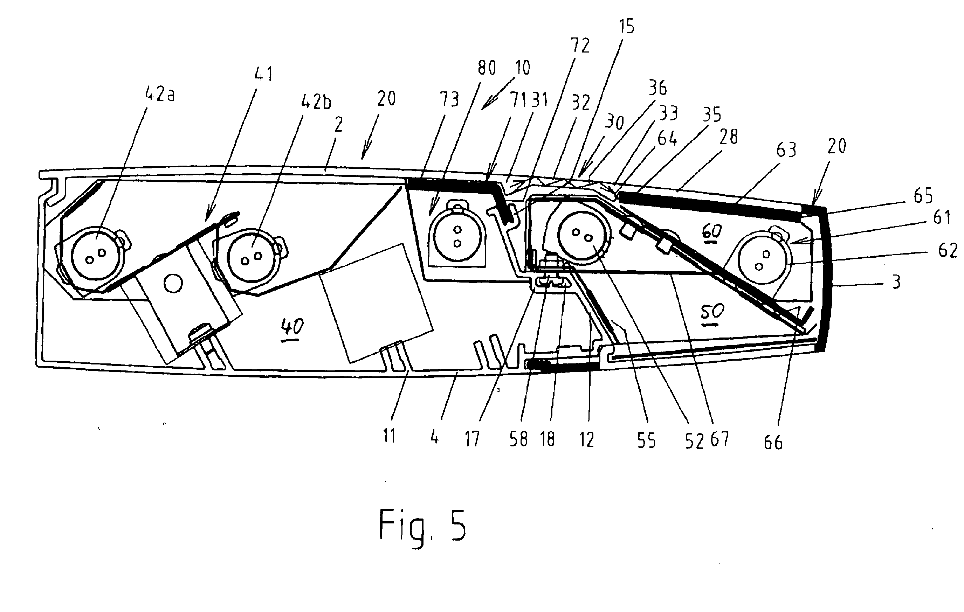

In der Figur 5 ist eine weitere Ausführungsform dargestellt, die sich von der in Figur 1 dargestellten Ausführungsform im wesentlichen durch eine dritte Beleuchtungseinrichtung 80, eine modifizierte Farbfilterscheibe 71 und eine zusätzliche Farbfilterscheibe 63 in der Stirnwandkammer 60 unterscheidet.

In der Stirnwandkammer 60 ist unterhalb des Deckwandabschnittes 28 die Farbfilterscheibe 63 angeordnet, die sich bis zur Lichtaustrittsfläche 35 des Lichtauskoppelelementes 33 erstreckt. Hierbei wird allerdings die Lichtaustrittsfläche 35 nicht vollständig durch die Lichteintrittsfläche 64 der Filterscheibe 63 verdeckt, so dass ein Teil des aus der Lichtauskoppeleinrichtung 33 austretenden Lichtes nach wie vor in Richtung Stirnwand 3 abgestrahlt werden kann. Es wird somit lediglich ein Teil des ausgekoppelten Lichtes abgezweigt, so dass ein zusätzlicher farbiger Effekt im Bereich des Deckwandabschnittes 28 erzeugt werden kann. Dieses farbige Licht wird wie das Raumlicht dadurch nach oben abgestrahlt und vermischt sich mit diesem. In der Stirnwandkammer kann ebenfalls eine zweite Beleuchtungseinrichtung 61 mit einer Leuchtstoffröhre 62 angeordnet sein.

Der Farbfilter an dem Lichteinkoppelelement 31 besteht aus einer abgewinkelten Filterscheibe 71 mit den beiden Schenkeln 72 und 73. Der Schenkel 72 steckt in der Filteraufnahme 15 der Zwischenwand 12, während der zweite Schenkel 73 sich unterhalb der Deckwand 2 erstreckt. Unterhalb der Farbfilterscheibe 71 ist die dritte Beleuchtungseinrichtung 80 in Form einer Leuchtstoffröhre angeordnet, die sich ebenfalls in Längsrichtung erstreckt. Somit besitzt die Lichtführungsstruktur 30 eine eigene Beleuchtungseinrichtung, die von der Raumbeleuchtungseinrichtung 41 unabhängig ist. Die Deckwand 2 ist auch in diesem Bereich des Schenkels 73 der Filterscheibe 71 lichtdurchlässig, so dass farbiges Licht nach oben abgestrahlt werden kann, wodurch ein farblicher Effekt bei der Raumbeleuchtung erzielt werden kann.

Die Leselichteinrichtung 51 wird von einer oder mehreren Schauben 58 in der Verschiebenut 18 gehalten und geführt. Mittels eines Befestigungsbleches 67, das an dieser Schraube 58 angreift und einem daran angeordneten Halteblech 66 wird die Beleuchtungseinrichtung 61 in der Stirnwandkammer 60 fixiert.

### Bezugszeichen

- 1: Rückwand
- 2: Deckwand
- 3: Stirnwand
- 4: Bodenwand
- 5: Seitenwand
- 6: Seitenwand
- 7: Deckwandabschnitt
- 10: Gehäuse
- 11: Grundrahmen
- 12: Zwischenwand
- 13: Bodenwandabschnitt
- 14: Halteleiste
- 15: Filteraufnahme
- 16: Halteleiste
- 17: Zwischenwandplateau
- 18: Verschiebenut
- 20: Gehäusedeckel
- 21: Klemmleiste
- 22: lichtdurchlässiger Frontabschnitt
- 23: Deckwandabschnitt
- 24: Prismenscheibe
- 25: Bodenwandabschnitt
- 26: Bodenwandabschnitt
- 27: Haltenase
- 28: Deckwandabschnitt
- 30: Lichtführungsstruktur
- 31: Lichteinkoppelelement
- 32: Lichtleiter
- 33: Lichtauskoppelelement
- 34: Lichteintrittsfläche
- 35: Lichtaustrittsfläche
- 36: Strahlengang
- 40: erste Kammer
- 41: Raumbeleuchtungseinrichtung
- 42a, b: Leuchtstoffröhre
- 43a, b: Reflektor
- 44a, b: Reflektoröffnung
- 45a, b: Reflektorbodenwand
- 50: Leselichtkammer
- 51: Leselichteinrichtung
- 52: Leuchtstoffröhre
- 53: Reflektor
- 54: Reflektoröffnung
- 55: Reflektorwand
- 56: Reflektorwand
- 57: Reflektorwand
- 58: Schraube
- 60: Stirnwandkammer
- 61: zweite Beleuchtungseinrichtung
- 62: Leuchtstoffröhre
- 62a, b: Leuchtmittel
- 63: Farbfilterscheibe
- 64: Eintrittsfläche
- 66: Halteblech
- 67: Befestigungsblech
- 70: Farbfilterscheibe
- 71: Farbfilterscheibe
- 72: erster Schenkel
- 73: zweiter Schenkel
- 80: dritte Beleuchtungseinrichtung
- 91: Versorgungsbalken
- 90: Zimmerwand
- 92: Deckwand

## Patentansprüche

1. Leuchte mit einem einen Gehäusedeckel aufweisenden langgestreckten Gehäuse, in dem eine Raumbeleuchtungseinrichtung (41) angeordnet ist, und mit einer Lichtführungsstruktur (30), die ein Lichteinkoppelelement (31), einen Lichtleiter (32) und eine Lichtauskoppelelement (33) aufweist, und die einen Teil des von der Raumbeleuchtungseinrichtung (41) in die Lichtführungseinrichtung (30) eingetretenen Lichts zur Ausleuchtung zusätzlicher Gehäuseabschnitte durch das Lichtauskoppelelement (33) in das Gehäuseinnere abstrahlt, **dadurch gekennzeichnet, dass** die Lichtführungsstruktur in eine Deckwand des Gehäusedeckels eingeformt ist.

2. Leuchte nach Anspruch 1, **dadurch gekennzeichnet, dass** sich die Lichtführungsstruktur (30) in Querrichtung des Gehäuses (10) erstreckt.

3. Leuchte nach einem der Ansprüche 1 oder 2, **dadurch gekennzeichnet, dass** das Lichtauskoppelelement (33) in eine an eine Gehäusestirnwand (3) angrenzende Stirnwandkammer (60) gerichtet ist.

4. Leuchte nach Anspruch 3, **dadurch gekennzeichnet, dass** das Lichtauskoppelelement (33) auf die Gehäusestimwand (3) gerichtet ist, die in mindestens einem Abschnitt (22, 23) aus einem lichtdurchlässigen Material besteht.

5. Leuchte nach Anspruch 4, **dadurch gekennzeichnet, dass** der lichtdurchlässige Abschnitt (22, 23) der Gehäusestirnwand (3) eingefärbt ist.

6. Leuchte nach einem der Ansprüche 1 bis 5, **dadurch gekennzeichnet, dass** dem Lichtauskoppelelement (33) mindestens ein Farbfilter (63) nachgeordnet ist.

7. Leuchte nach Anspruch 6, **dadurch gekennzeichnet, dass** der Farbfilter (63) an der Innenseite der Deckwand (2) der Stimwandkammer (60) angeordnet ist.

8. Leuchte nach einem der Ansprüche 3 bis 7, **dadurch gekennzeichnet, dass** in der Stirnwandkammer (60) eine zweite Beleuchtungseinrichtung (61) angeordnet ist.

9. Leuchte nach einem der Ansprüche 1 bis 8, **dadurch gekennzeichnet, dass** das Lichteinkoppeleiement (31) einen Teil des Lichtes der Raumbeieuchtungseinrichtung (41) aufnimmt.

10. Leuchte nach einem der Ansprüche 1 bis 9, **dadurch gekennzeichnet, dass** vor dem Lichteinkoppelelement (31) eine dritte Beleuchtungseinrichtung (80) angeordnet ist.

11. Leuchte nach einem der Ansprüche 1 bis 10, **dadurch gekennzeichnet, dass** dem Lichteinkoppelelement (31) ein Farbfilter (70,71) vorgeschaltet ist.

12. Leuchte nach Anspruch 11, **dadurch gekennzeichnet, dass** der Farbfilter aus einer abgewinkelten Farbfilterscheibe (71) besteht, wobei ein Schenkel (72) vor dem Lichteinkoppelelement (31) und der andere Schenkel (73) unter der Gehäusedeckwand (2) angeordnet ist.

13. Leuchte nach einem der Ansprüche 3 bis 12, **dadurch gekennzeichnet, dass** zwischen der Raumbeleuchtungseinrichtung (41) und der Stirnwandkammer (60) eine Leselichteinrichtung (51) angeordnet ist; die nach unten abstrahlt.

14. Leuchte nach Anspruch 13, **dadurch gekennzeichnet, dass** die Lesellchteinrichtung (51) an einer im Gehäuse (10) angeordneten Zwischenwand (12) in Längsrichtung verschiebbar angeordnet ist.

15. Leuchte nach einem der Ansprüche 13 oder 14, **dadurch gekennzeichnet, dass** die Lichtführungsstruktur (30) über der Leselichteinrichtung (51) angeordnet ist.

16. Leuchte nach einem der Ansprüche 1 bis 15, **dadurch gekennzeichnet, dass** das Gehäuse (10) einen Grundrahmen (11) und einen daran befestigten mindestens einen Teil der Deckwand (2) , die Stirnwand (3) und einen Teil der Bodenwand (4) umfassenden U-förmigen Gehäusedeckel (20) aufweist.

17. Leuchte nach Anspruch 16, **dadurch gekennzeichnet, dass** der Gehäusedeckel (20) aus Kunststoff, insbesondere aus PMMA oder PC, besteht.

18. Leuchte nach einem der Ansprüche 16 oder 17, **dadurch gekennzeichnet, dass** der Gehäusedeckel (20) auf den Grundrahmen (11) aufsteckbar ist.

19. Leuchte nach einem der Ansprüche 8 bis 18, **dadurch gekennzeichnet, dass** alle Beleuchtungseinrichtungen (41, 51, 61, 80) unabhängig voneinander schaltbar und/oder dimmbar sind.

## Claims

1. A lighting fixture having an elongate housing having a housing top cover, in which housing a room-illumination device (41) is arranged, and having a light guiding structure (30), which comprises a light injection element (31), a light guide (32) and a light extraction element (33), and which radiates a part of the light that has entered the light guiding device (30) from the room-illumination device (41) into the housing interior for illumination of additional housing portions by the light extraction element (33), **characterised in that** the light guiding structure is moulded into a top wall of the housing cover.

2. A lighting fixture according to claim 1, **characterised in that** the light guiding structure (30) extends in the transverse direction of the housing (10).

3. A lighting fixture according to claim 1 or 2, **characterised in that** the light extraction element (33) is directed into an end wall chamber (60) adjoining a housing end wall (3).

4. A lighting fixture according to claim 3, **characterised in that** the light extraction element (33) is directed onto the housing end wall (3), at least one portion (22, 23) of which consists of a transparent material.

5. A lighting fixture according to claim 4, **characterised in that** the transparent portion (22, 23) of the housing end wall (3) is tinted.

6. A lighting fixture according to any one of claims 1 to 5, **characterised in that** at least one colour filter (63) is arranged after the light extraction element (33).

7. A lighting fixture according to claim 6, **characterised in that** the colour filter (63) is arranged on the inside of the top wall (2) of the end wall chamber (60).

8. A lighting fixture according to any one of claims 3 to 7, **characterised in that** a second illumination device (61) is arranged in the end wall chamber (60).

9. A lighting fixture according to any one of claims 1 to 8, **characterised in that** the light injection element (31) admits a part of the light of the room-illumination device (41).

10. A lighting fixture according to any one of claims 1 to 9, **characterised in that** a third illumination device (80) is arranged in front of the light injection element (31).

11. A lighting fixture according to any one of claims 1 to 10, **characterised in that** a colour filter (70, 71) is arranged in front of the light injection element (31).

12. A lighting fixture according to claim 11, **characterised in that** the colour filter comprises an angled colour filter pane (71), one side piece (72) being arranged in front of the light injection element (31) and the other side piece (73) being arranged beneath the housing top wall (2).

13. A lighting fixture according to any one of claims 3 to 12, **characterised in that** a reading light device (51) that radiates light in a downward direction is arranged between the room-illumination device (41) and the end wall chamber (60).

14. A lighting fixture according to claim 13, **characterised in that** the reading light device (51) is arranged, so as to be slidable in the longitudinal direction, on an intermediate wall (12) disposed in the housing (10).

15. A lighting fixture according to any one of claims 13 or 14, **characterised in that** the light guiding structure (30) is arranged above the reading light device (51).

16. A lighting fixture according to any one of claims 1 to 15, **characterised in that** the housing (10) comprises a base frame (11) and affixed thereto a U-shaped housing cover (20) comprising at least a part of the top wall (2), the end wall (3) and a part of the bottom wall (4).

17. A lighting fixture according to claim 16, **characterised in that** the housing cover (20) consists of plastics material, in particular of PMMA or PC.

18. A lighting fixture according to any one of claims 16 or 17, **characterised in that** the housing cover (20) can be clipped onto the base frame (11).

19. A lighting fixture according to any one of claims 8 to 18, **characterised in that** all illumination devices (41, 51, 61, 80) can be switched and/or dimmed independently of one another.

## Revendications

1. Luminaire, comportant un boîtier allongé, qui est muni d'un couvercle et dans lequel est monté un dispositif d'éclairage d'une pièce (41), et comportant une structure de guidage de la lumière (30), qui comporte un élément d'entrée de la lumière (31), un guide de lumière (32) et un élément de sortie de la lumière (33), et qui projette à l'intérieur du boîtier via l'élément de sortie de la lumière (33) une partie de la lumière du dispositif d'éclairage (41) entrant dans l'élément d'entrée de la lumière (31), en vue d'éclairer des parties supplémentaires du boîtier, **caractérisé en ce que** la structure de guidage de la lumière (30) est formée dans une paroi de recouvrement du couvercle du boîtier.

2. Luminaire selon la revendication 1, **caractérisé en ce que** la structure de guidage de la lumière (30) s'étend dans la direction transversale du boîtier (10).

3. Luminaire selon la revendication 1 ou 2, **caractérisé en ce que** l'élément de sortie de la lumière (33) est monté dans une chambre de paroi frontale (60), adjacente à une paroi frontale (3) du boîtier.

4. Luminaire selon la revendication 3, **caractérisé en ce que** l'élément de sortie de la lumière (33) est dirigé vers la paroi frontale (3) du boîtier, laquelle est formée par au moins une partie (22, 23) réalisée dans un matériau transparent.

5. Luminaire selon la revendication 4, **caractérisé en ce que** la partie (22, 23) transparente de la paroi frontale (3) du boîtier est colorée.

6. Luminaire selon l'une quelconque des revendications 1 à 5, **caractérisé en ce qu'**au moins un filtre coloré (63) est monté en aval de l'élément de sortie de la lumière (33).

7. Luminaire selon la revendication 6, **caractérisé en ce que** le filtre coloré (63) est disposé sur la face intérieure de la paroi de recouvrement (2) de la chambre de paroi frontale (60).

8. Luminaire selon l'une quelconque des revendications 3 à 7, **caractérisé en ce qu'**un deuxième dispositif d'éclairage (61) est monté dans la chambre de paroi frontale (60).

9. Luminaire selon l'une quelconque des revendications 1 à 8, **caractérisé en ce que** l'élément d'entrée de la lumière (31) reçoit une partie de la lumière du dispositif d'éclairage d'une pièce (41).

10. Luminaire selon l'une quelconque des revendications 1 à 9, **caractérisé en ce qu'**un troisième dispositif d'éclairage (80) est disposé devant l'élément d'entrée de la lumière (31).

11. Luminaire selon l'une quelconque des revendications 1 à 10, **caractérisé en ce qu'**un filtre coloré (70, 71) est monté en amont de l'élément d'entrée de la lumière (31).

12. Luminaire selon la revendication 11, **caractérisé en ce que** le filtre coloré est formé par une vitre (71) de filtre coloré repliée, une branche (72) étant disposée devant l'élément d'entrée de la lumière (31) et l'autre branche (73) étant disposée en dessous de la paroi de recouvrement (2) du boîtier.

13. Luminaire selon l'une quelconque des revendications 3 à 12, **caractérisé en ce qu'**entre le dispositif d'éclairage d'une pièce (41) et la chambre de paroi frontale (60) est monté un dispositif d'éclairage pour lecture (51), qui diffuse la lumière vers le bas.

14. Luminaire selon la revendication 13, **caractérisé en ce que** le dispositif d'éclairage pour lecture (51) est monté de manière mobile dans la direction longitudinale sur une cloison (12) montée dans le boîtier (10).

15. Luminaire selon la revendication 13 ou 14, **caractérisé en ce que** la structure de guidage de la lumière (30) est disposée au-dessus du dispositif d'éclairage pour lecture (51).

16. Luminaire selon l'une quelconque des revendications 1 à 15, **caractérisé en ce que** le boîtier (10) comporte un cadre de base (11) et un couvercle (20) en forme de U, fixé contre ce dernier et enserrant au moins une partie de la paroi de recouvrement (2), de La paroi frontale (3) et une partie de la paroi de fond (4).

17. Luminaire selon la revendication 16, **caractérisé en ce que** le couvercle (20) est réalisé en matière plastique, en particulier en PMMA ou en PC.

18. Luminaire selon la revendication 16 ou 17, **caractérisé en ce que** le couvercle (20) peut être enfiché sur le cadre de base (11).

19. Luminaire selon l'une quelconque des revendications 8 à 18, **caractérisé en ce que** tous les dispositifs d'éclairage (41, 51, 61, 80) peuvent être connectés et/ou variés en intensité lumineuse indépendamment les uns des autres.
